# EUROPEAN PATENT APPLICATION

(11) **EP 4 130 156 A1**
(43) Date of publication of application: **08.02.2023**
(21) Application number: 22762419.4
(22) Date of filing: 23.02.2022
(51) Int. Cl.: C08L 83/04, C08K 13/04, H01M 50/20

(54) **THERMAL INSULATION PAD AND PREPARATION METHOD THEREFOR, AND BATTERY PACK AND APPARATUS**

(30) Priority: 03.03.2021 CN 202110236896
(71) Applicant: Jiangsu Contemporary Amperex Technology Limited, Liyang, Jiangsu 213300 (CN)
(72) Inventor: CHEN, Zhiming, hangzhou, Jiangsu 213300 (CN); YANG, Quan, hangzhou, Jiangsu 213300 (CN); LIAO, Boxiang, hangzhou, Jiangsu 213300 (CN); GUO, Haijian, hangzhou, Jiangsu 352100 (CN)
(74) Representative: Rowlands, Stuart Michael
(86) International application number: PCT/CN2022/077500
(87) International publication number: WO 2022/183953

(57) **Abstract**

The present application discloses a heat insulation pad (70) and method of making the same, battery assembly (10) and device. The heat insulation pad (70) includes silicone rubber (71) and aerogel (72) dispersed in the silicone rubber (71), wherein the heat insulation pad (70) satisfies that: a temperature difference between a surface on one side of the heat insulation pad (70) and a surface on the other side opposite to the one side is ≥ 150°C, when the surface on one side of the heat insulation pad (70) contacts a hot surface having a temperature of 600°C for 5 minutes under a pressure of 0.9 MPa followed by pressure relief and then contacts a hot surface having a temperature of 600°C for another 20 minutes. By using the heat insulation pad (70) of the present application, the safety performance of the battery assembly (10) and of the device can be improved.

## Description

### CROSS-REFERENCE TO RELATED APPLICATION

This application claims priority to Chinese Patent Application No. 202110236896.3, entitled "heat insulation pad and method of making the same, battery assembly and device" and filed on March 3, 2021, which is incorporated herein by reference in its entirety.

### TECHNICAL FIELD

The present application belongs to the technical field of energy storage devices, and particularly refers to a heat insulation pad and a method of making the same, a battery assembly and a device.

### BACKGROUND

Secondary batteries are widely used in various consumer electronic products and large-scale devices such as electric vehicles and energy storage systems, owing to their advantages including high energy density, long cycle life, no pollution, and no memory effect. For example, as environmental protection issues are paid more and more attention, new energy electric vehicles are becoming more and more popular.

In order to meet the requirements on endurance mileage of electric vehicles, a large number of battery cells combined in series and parallel are usually used in battery assemblies. When thermal runaway occurs in one or more battery cells in a battery assembly, the thermal runaway tends to spread in the battery assembly, which brings about potential safety hazards. Since safety performance of battery assembly directly affects the safety of electric vehicles and passengers, how to effectively improve safety performance of battery assembly has become an urgent technical problem to be solved.

### SUMMARY

In view of the technical problems existing in the background, the present application provides a heat insulation pad and a method of making the same, a battery assembly and a device, aiming at effectively improving the safety performance of battery assembly.

A first aspect of the present application provides a heat insulation pad for use in a battery assembly, the heat insulation pad includes silicone rubber and aerogel dispersed in the silicone rubber, wherein the heat insulation pad satisfies that: a temperature difference between a surface on one side of the heat insulation pad and a surface on the other side opposite to the one side is ≥ 150°C, when the surface on one side of the heat insulation pad contacts a hot surface having a temperature of 600°C for 5 minutes under a pressure of 0.9 MPa followed by pressure relief and then contacts a hot surface having a temperature of 600°C for another 20 minutes.

The heat insulation pad provided by the present application is formed by compounding silicone rubber and aerogel, and the heat insulation pad satisfies that the temperature difference between the surface in contact with a hot surface under pressure and the surface on the opposite side is ≥150°C. As a result, using the heat insulation pad in battery assemblies can effectively block the heat conduction between battery cells, thereby greatly slowing down the spread of thermal runaway in battery assemblies, thereby improving safety performance of the battery assemblies.

In some embodiments, said temperature difference is ≥ 200°C. In some embodiments, said temperature difference is ≥ 300°C. In some embodiments, said temperature difference is between 200°C and 465°C. In some embodiments, said temperature difference is between 300°C and 465°C.

In any embodiment of the first aspect of the present application, the heat insulation pad has a thermal conductivity coefficient at 100°C of ≤ 0.13W/(m K), optionally from 0.022W/(m·K) to 0.09W/(m-K), further optionally from 0.023 W/(m K) to 0.05 W/(m ·K). Low thermal conductivity coefficient of the heat insulation pad is beneficial to improve the barrier effect on the heat conduction between battery cells, thereby improving the safety performance of battery assembly. A thermal conductivity coefficient of the heat insulation pad within the appropriate ranges not only improves the safety performance of battery assembly, but also enables battery assembly to have a longer cycle life.

In any embodiment of the first aspect of the present application, the heat insulation pad has a compressive strength that ranges from 1 MPa to 30 MPa, optionally from 3 MPa to 25 MPa, and further optionally from 5 MPa to 20 MPa. A compressive strength of the heat insulation pad within the appropriate ranges can ensure that the heat insulation pad is not prone to rupture or yield under the action of cyclic expansion force of battery cells, thus it can effectively provide heat insulation and buffer cyclic expansion for a long time.

In any embodiment of the first aspect of the present application, the heat insulation pad has a compressive elastic modulus that ranges from 1 MPa to 40 MPa, optionally from 5 MPa to 40 MPa, further optionally from 10 MPa to 30 MPa, and further optionally from 15 MPa to 25 MPa. The heat insulation pad having a good compressive elastic modulus can buffer the cyclic expansion stress of battery cells, thereby further improving the safety performance of battery assembly, and is also beneficial to the battery assembly having a high cycle capacity retention rate.

In any embodiment of the first aspect of the present application, the heat insulation pad has a thickness that ranges from 1 mm to 10 mm, optionally from 2 mm to 6 mm. A heat insulation pad having a thickness within the appropriate ranges allows the battery to have higher safety performance and higher volume energy density or gravimetric energy density.

In any embodiment of the first aspect of the present application, the aerogel is spherical or quasi-spherical particle. The aerogel having a spherical or quasi-spherical morphology can reduce the stress concentration phenomenon when it is compressed, thereby ensuring that the particles are not easily broken and the pore structure inside the particles is not easily damaged, so that the heat insulation pad has a better long-term thermal insulation performance.

In any embodiment of the first aspect of the present application, the aerogel has a particle size that ranges from 0.1 mm to 5 mm, optionally from 0.3 mm to 3 mm. Aerogel having a particle size within the appropriate ranges can not only lead to better dispersion uniformity of particles in the aerogel, but also ensure that the heat insulation pad has a high volume ratio of aerogel, thereby providing better thermal insulation performance of the heat insulation pad.

In any embodiment of the first aspect of the present application, the aerogel includes an with a particle size that ranges from 1.8 mm to 2.2 mm, an aerogel with a particle size that ranges from 0.8 mm to 1.2 mm, and an aerogel with a particle size that ranges from 0.4 mm to 0.6 mm. Through reasonable particle size matching, the volume ratio of aerogel in the heat insulation pad can be further increased, and meanwhile the thermal bridge phenomenon that may be caused by the presence of more silicone rubber in gaps between particles can be reduced, thereby further improving thermal insulation effect of the heat insulation pad.

In any embodiment of the first aspect of the present application, the aerogel includes the aerogel with a particle size from 1.8 mm to 2.2 mm, the aerogel with a particle size from 0.8 mm to 1.2 mm, and the aerogel with a particle size from 0.4 mm to 0.6 mm in a volume ratio of (25 to 40) : (5 to 10) : (1 to 3). By further optimizing the particle size matching, the thermal insulation performance of the heat insulation pad can be further improved.

In any embodiment of the first aspect of the present application, the aerogel has a pore size that ranges from 1 MPa to 500 MPa, optionally from 10 MPa to 100 MPa, and further optionally from 30 MPa to 50 MPa. Aerogels having nano-scale porous structures with appropriate size can further improve the thermal insulation performance of the heat insulation pad.

In any embodiment of the first aspect of the present application, the aerogel is selected from one or more of inorganic oxide aerogels, carbon-based aerogels, and organic polymer aerogels. In some embodiments, the aerogel is selected from inorganic oxide aerogels. Optionally, the aerogel is selected from one or more of silicon oxide aerogel, aluminum oxide aerogel, zirconium oxide aerogel, and yttrium oxide aerogel.

In any embodiment of the first aspect of the present application, the aerogel particles is surface-modified with a polymer selected from one or more of polyolefin acids, esters of polyolefin acids (polyolefin acid esters), polyethers, polyalcohols, polyolefins, their derivatives, and their copolymers. In some embodiments, the polymer is selected from one or more of polyacrylic acid, polymethyl methacrylate, polyethyl methyl acrylate, polyethylene glycol, polyvinyl alcohol, polystyrene, polybutadiene, polypropylene, their derivatives, and their copolymers. By using polymer-modified aerogel, the heat insulation pad can better take its thermal insulation effect.

In any embodiment of the first aspect of the present application, the silicone rubber is condensation-type or addition-type silicone rubber, optionally two-component addition-type silicone rubber. Two-component addition-type silicone rubber is not prone to shrinkage during the vulcanization process, and the resulting heat insulation pad has high structural strength.

In any embodiment of the first aspect of the present application, silicone rubber includes one or more of silicone rubber, methyl vinyl silicone rubber, methyl phenyl vinyl silicone rubber, nitrile silicone rubber, and silicon nitrogen rubber. In some embodiments, the silicone rubber includes two-component addition-type silicone rubber.

In any embodiment of the first aspect of the present application, the silicone rubber includes foamed silicone rubber.

A second aspect of the present application provides a battery assembly, including a plurality of battery cells arranged in an array, wherein a heat insulation pad is disposed between at least two adjacent battery cells, and at least one heat insulation pad is the heat insulation pad according to the present application. Since the battery assembly of the present application adopts the heat insulation pad according to the present application, at least higher safety performance can be obtained.

A third aspect of the present application provides an electrical device, comprising the battery assembly according to the present application. Since the electrical device of the present application adopts the battery assembly according to the present application, at least higher safety performance can be obtained.

A fourth aspect of the present application provides a method of preparing a heat insulation pad, comprising: dispersing an aerogel in a liquid silicone rubber and form a film body; molding the film body by vulcanization, to obtain a heat insulation pad; wherein the heat insulation pad satisfies that: a temperature difference between a surface on one side of the heat insulation pad and a surface on the other side opposite to the one side is ≥ 150°C, when the surface on one side of the heat insulation pad contacts a hot surface having a temperature of 600°C for 5 minutes under a pressure of 0.9 MPa followed by pressure relief and then contacts a hot surface having a temperature of 600°C for another 20 minutes.

In any embodiment of the second aspect of the present application, the liquid silicone rubber and the aerogel are in a mass ratio of 1 : (0.2 to 2).

In any embodiment of the second aspect of the present application, a volume ratio of the liquid silicone rubber to the aerogel ranges from 50:50 to 8:92, optionally from 30:70 to 10:90.

In any embodiment of the second aspect of the present application, the liquid silicone rubber has a viscosity that ranges from 0.1 Pa s to 50 Pa s, optionally from 0.3 Pa s to 25 Pa·s, and further optionally from 0.5 Pa·s to 15 Pa s.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the given drawings without creative work. It should be noted that the accompanying drawings are not drawn to actual scale.
Fig. 1 is a schematic diagram of a vehicle provided by an embodiment of the present application.
Fig. 2 is a schematic and exploded diagram of a battery assembly provided by an embodiment of the present application.
Fig. 3 is a schematic structural diagram of another battery assembly provided by an embodiment of the present application, wherein the outer packaging and other accessories of the battery assembly are omitted.
Fig. 4 is a schematic structural diagram of a heat insulation pad provided by an embodiment of the present application.

### DETAILED DESCRIPTION

In order to make the object, technical solution, and technical effects of the present application clearer, the present application will be further described in detail below in conjunction with embodiments. It should be understood that the embodiments described in the present description are merely used to illustrate the present application, but not intended to limit the present application.

For the sake of brevity, only certain numerical ranges are explicitly disclosed herein. However, any lower limit may be combined with any upper limit to form a range that is not explicitly described; and any lower limit may be combined with other lower limit to form an unspecified range; and any upper limit may be combined with any other upper limit to form an unspecified range. Further, although not explicitly specified, each point or single value between the endpoints of a range is included in the range. Thus, each point or single value can be combined with any other point or single value or combined with other lower or upper limits to form a range that is not explicitly specified.

In the description herein, it should be noted that, unless otherwise stated, a numerical range represented by using the symbol "~" includes both endpoints and any value between the two endpoints. For example, "1~30" or "from 1 to 30" includes 1, 30, and any number between 1 and 30 (e.g., 4.5, 5, 7, 10, 13, 15, 16.3, 20, 23, etc.). "Several" means one or more; "multiple" means two or more (including two); "above" and "below" include this number. Orientation or position relationships indicated by the terms such as "upper", "lower", "inner", "outer" are based on orientation or position relationships shown in the accompanying drawings, and are used only for ease and brevity of illustration and description of the present disclosure, rather than indicating or implying that the mentioned device or component needs to have a particular orientation or needs to be constructed and operated in a particular orientation, and therefore should not be construed as a limitation on this document.

In the description of this application, it should also be noted that, the terms "mounted," "connected," and "coupled" and variations thereof are used broadly. For example, it may be a fixed connection or a demountable connection or an integral connection. It may be a direct connection or indirect connection through an intermediate medium. The specific meanings of the above terms in the present application may be understood by a person of ordinary skill in the art according to specific circumstances.

The above summary of the present application is not intended to describe each disclosed embodiment or every implementation in this application. The following description illustrates exemplary embodiments more specifically. In many places throughout the application, guidance is provided through a series of examples, which can be used in various combinations. In each instance, the enumeration is only a representative group and should not be interpreted as exhaustive.

The device described in the embodiments of this application may be any device in which a battery is used. Examples of the device may include, but not limited to, mobile apparatus (e.g., a mobile phone, a laptop computer, portable apparatus, etc.), an electric vehicle (e.g., a pure electric vehicle, a hybrid electric vehicle, a plug-in hybrid electric vehicle, an electric bicycle, an electric scooter, an electric golf vehicle, an electric truck), electric tools (such as electric drill, electric grinder, electric wrench, electric screwdriver, electric hammer, impact electric drill, concrete vibrator, electric planer, etc.), an electric train, a ship, a satellite, an energy storage system, etc.

The device includes the battery assembly of embodiments of the present application. The battery assembly may be used as a power source of the device, for supplying electrical energy to the device, or as an energy storage unit for the device.

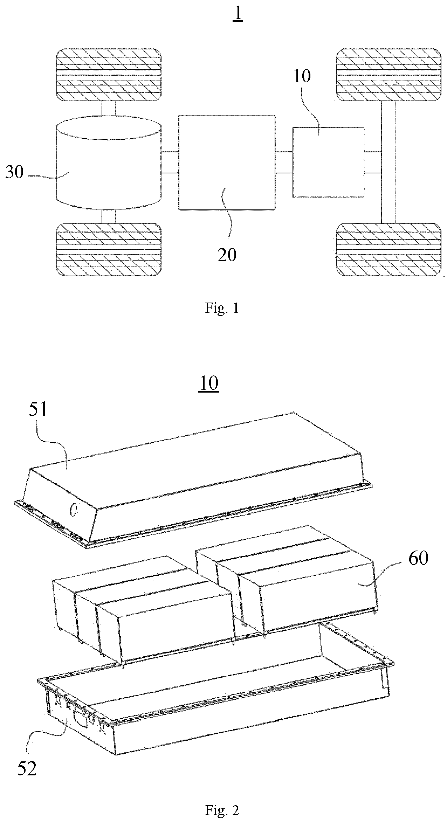

Fig. 1 is a schematic structural diagram of a device as an example. The device is an electric vehicle 1, which may be a pure electric vehicle, a hybrid vehicle, or an extended-range vehicle. A battery assembly 10 may be provided inside the electric vehicle 1. The battery assembly 10 is used as a power source for the electric vehicle 1 for powering devices or other operational electrical needs such as navigation, air conditioner, audio, and the like. The number of battery cells contained in the battery assembly 10 and the assembly position of the battery assembly 10 may be adjusted according to actual needs. As an example, the battery assembly 10 may be provided at the bottom of the electric vehicle 1, and may be located at the front or rear of the vehicle. The electric vehicle 1 may also be provided with a controller 20 and a motor 30. The controller 20 is used to control the battery pack 10 to supply power to the motor 30.

The battery assembly 10 includes a plurality of battery cells to meet the requirements of high voltage and high capacity. Multiple battery cells can be connected in series, in parallel, or in a hybrid of series and parallel (referred to as "hybrid" or "series-parallel" for short). The battery assembly 10 may be a battery pack or a battery module.

Fig. 2 is a schematic and exploded diagram of a battery assembly 10 as an example. The battery assembly 10 is a battery pack. Referring to Fig. 2, the battery pack may include a plurality of battery cells 60 connected in series, in parallel or in series-parallel configurations. The battery pack may also include a case body (or a cover). The case body may include a first case body 51 and a second case body 52. The first case body 51 and the second case body 52 can be fastened to each other to form a case body with a closed cavity. A plurality of battery cells 60 are accommodated in the case body. The number of battery cells contained in the battery pack may be adjusted according to actual needs.

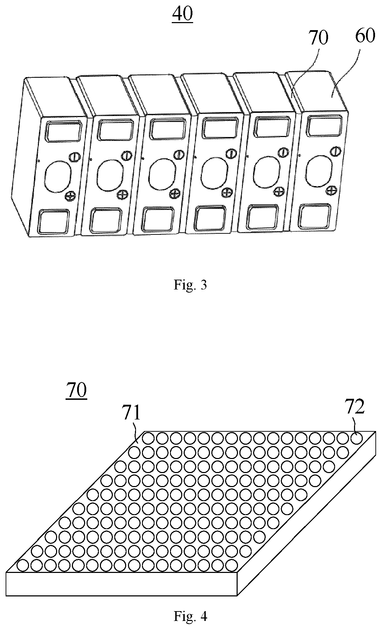

Fig. 3 is a schematic structural diagram of another battery assembly 10 provided by the present application. The battery assembly 10 is a battery module 40. Referring to Fig. 3, the battery module 40 may include a plurality of battery cells 60 connected in series, in parallel or in series-parallel configurations. The number of battery cells 60 contained in the battery module 40 may be adjusted according to actual needs. In this application, the battery cells 60 can be selected from lithium ion secondary batteries, lithium ion primary batteries, lithium sulfur batteries, sodium lithium ion batteries, sodium ion batteries, magnesium ion batteries, etc., which are not limited in this application. The battery cell 60 may be in the form of a cylinder, a flat body, a rectangular parallelepiped, or other shapes, which are not limited in the present application.

In the battery module 40, the heat insulation pad 70 of any embodiment of the present application is provided between at least two adjacent battery cells 60. The heat insulation pad 70 functions to block heat. In some embodiments, a plurality of battery cells 60 are arranged along the length direction of the battery module 40, and two adjacent battery cells 60 face each other on their large/main surfaces. The large/main surface herein refers to the side face with the largest area (outer surface) in a battery cell. A heat insulation pad 70 is provided between two groups of adjacent battery cells 60. The heat insulation pad 70 may be arranged in surface-to-surface contact with or without contact with the battery cells 60. The number of battery cells 60 contained in each group of battery cells 60 may be one or more, for example, 1 to 5, or 2 to 4, etc., and for example, 1, 2, or 3, etc.

The battery module 40 may further include a fixing assembly (not shown in figures) for fixing the plurality of battery cells 60. As an example, the fixing assembly may include a housing and a cover, the housing having an accommodating space and an opening communicating with the accommodating space. The battery cells 60 are placed in the accommodating space, and the cover is placed on the housing to close the opening. Apparently, the fixing assembly can also have other structures known in the art that can fix the battery cells 60.

Hereinafter, the heat insulation pad 70 provided in embodiments of this application will be described in detail.

Fig. 4 is a schematic diagram of a heat insulation pad 70 as an example. Referring to Fig. 4, a heat insulation pad 70 provided in embodiments of the present application includes silicone rubber 71 and aerogel 72 dispersed in the silicone rubber 71, wherein the heat insulation pad 70 satisfies that: a temperature difference between a surface on one side of the heat insulation pad 70 and a surface on the other side opposite to the one side is ≥ 150°C, when the surface on one side of the heat insulation pad 70 contacts a hot surface having a temperature of 600°C for 5 minutes under a pressure of 0.9 MPa followed by pressure relief and then contacts a hot surface having a temperature of 600°C for another 20 minutes.

A thermally conductive plate may be used as the hot surface. The thermally conductive plate can be selected from known plates that can withstand a pressure of 0.9 MPa and a temperature of 600°C and have good thermal conductivity. For example, an alloy steel plate can be used as the thermally conductive plate. The thermally conductive plate has the same shape as the heat insulation pad 70 with the edges aligned. The thermally conductive plate may have a thickness that ranges from 10 mm to 30 mm, for example 26 mm.

The heat insulation pad 70 has two opposite surfaces in the thickness direction, one of which is in surface-to-surface contact with a thermally conductive plate, and the other surface is in surface-to-surface contact with another thermally conductive plate. The above temperature difference is the temperature difference between the two surfaces.

As an example, the heat insulation pad 70 is sandwiched between two thermally conductive plates to form a stacked body; a pressure of 0.9 MPa is applied to the stacked body; the thermally conductive plate on one side of the heat insulation pad 70 is heated to 600°C and kept for 5 minutes, followed by pressure relief; then the heat insulation pad 70 contacts the thermally conductive plate at 600°C for another 20 minutes; the temperature difference between the surface of the heat insulation pad 70 in contact with the 600°C thermal plate and the surface on opposite side is ≥150°C.

As a more specific example, one side surface of the heat insulation pad 70 in the thickness direction is in surface contact with an alloy steel plate with the edges aligned, and the other side surface in the thickness direction of the heat insulation pad 70 in the thickness direction is in surface contact with another alloy steel plate with the edges aligned to form a stack in which the heat insulation pad 70 is sandwiched between two alloy steel plates; a pressure of 0.9 MPa is applied to the stack along the stacking direction (i.e., the thickness direction of the heat insulation pad 70); the alloy steel plate on one side of the heat insulation pad 70 is heated to 600°C, and the pressure is released after maintaining the temperature and pressure for 5 minutes; the heat insulation pad 70 continues to be in contact with the 600°C alloy steel plate for another 20 minutes; the temperature of the one side surface in contact with the 600°C alloy steel plate of the heat insulation pad 70 is measured as T1 (that is, the temperature of the hot surface of the heat insulation pad 70), and the temperature of the other side surface opposite to the one side surface (that is, the temperature of the cold surface of the heat insulation pad 70) is measured as T2, wherein T1 - T2 ≥150°C.

The shape of the heat insulation pad 70 is not particularly limited, and can be selected according to the shape and structure of the battery cell 60. As an example, the heat insulation pad 70 may be a circular, rectangular or other polygonal sheet-like body.

The heat insulation pad 70 provided by the present application is formed by compounding silicone rubber 71 and aerogel 72. Aerogel 72 has a nanoporous structure and excellent performance of low thermal conductivity. Silicone rubber 71 not only has excellent heat resistance to ensure that it is not easily decomposed at high temperature, but also allows the heat insulation pad 70 to have good compressive mechanical properties because of molecular structure characteristics of silicone rubber 71. The inventors found that the above temperature difference of the heat insulation pad 70 represents a comprehensive reflection of the thermal conductivity, thickness, compressive mechanical properties, etc. of the heat insulation pad 70, and can be used as an indicator to evaluate the properties of the heat insulation pad 70 in the battery assembly 10 to block the heat conduction between battery cells 60 in thermally runaway. By using the heat insulation pad 70 having the temperature difference within the appropriate ranges in the battery assembly 10, heat conduction from battery cells 60 in thermal runaway to the adjacent battery cells 60 can be effectively blocked, thereby greatly slowing down the spread of thermal runaway in the battery assembly 10 and thus improving safety performance of the battery assembly 10.

In some embodiments, said temperature difference is ≥ 200°C, ≥ 300°C, ≥ 350°C, or 400°C. Optionally, said temperature difference ranges from 150°C to 500°C, from 200°C to 480°C, from 200°C to 465°C, from 270°C to 470°C, from 300°C to 465°C, from 350°C to 465°C, from 310°C to 450°C , or from 320°C to 400°C. Said temperature difference of the heat insulation pad 70 within an appropriate range indicates that the heat insulation pad 70 not only has a low thermal conductivity, but also can withstand the cyclic expansion stress of the battery cells 60, thereby providing better thermal insulation performance and obtaining the battery assembly 10 with higher safety performance.

In some embodiments, the heat insulation pad 70 has a thermal conductivity coefficient at 100°C of ≤ 0.13 W/(m K). The smaller the thermal conductivity coefficient of the heat insulation pad 70 is, the better the thermal insulation performance thereof is, so that the safety performance of the battery can be further improved. In some embodiments, the thermal conductivity coefficient at 100°C of the heat insulation pad 70 ranges from 0.022 W/(m K) to 0.09 W/(m K), optionally from 0.022 W/(m·K) to 0.085 W/(m·K), from 0.025 W/(m K) to 0.065 W/(m K), from 0.023 W/(m·K) to 0.05 W/(m K), from 0.03 W/(m K) to 0.06 W/(m·K), or from 0.03 W/ (m K) to 0.05 W/(m K), etc. The thermal conductivity coefficient of the heat insulation pad 70 within the appropriate ranges means that the ratio of the silicone rubber 71 to the aerogel 72 is more proper, resulting in the heat insulation pad 70 not only having high thermal insulation performance, but also having good compressive elastic modulus and compressive strength, and thus resulting in the battery assembly 10 having higher safety performance and longer cycle life.

In some embodiments, the compressive strength of the heat insulation pad 70 ranges from 1 MPa to 45 MPa, optionally from 1 MPa to 30 MPa, from 2 MPa to 26 MPa, from 3 MPa to 25 MPa, from 4 MPa to 22 MPa, or from 5 MPa to 20 MPa. During the use of the battery assembly 10, the battery cells 60 will generate a large cyclic expansion force. A compressive strength of the heat insulation pad 70 within the appropriate ranges can ensure that the heat insulation pad 70 is not prone to rupture or yield under the action of cyclic expansion force of battery cells 60, thus it can effectively provide heat insulation and buffer cyclic expansion for a long time.

In some embodiments, the compressive elastic modulus of the heat insulation pad 70 ranges from 1 MPa to 40 MPa, from 5 MPa to 40 MPa, from 3 MPa to 30 MPa, from 10 MPa to 30 MPa, from 4 MPa to 28 MPa, from 5 MPa to 25 MPa, from 6 MPa to 20 MPa, from 10 MPa to 25 MPa, 10 MPa to 20 MPa, or from 15 MPa to 25 MPa, etc. The compressive elastic modulus of the heat insulation pad 70 within the appropriate ranges can not only provide a good thermal insulation performance, but also meet the expansion requirements of the battery cells 60 , and especially can effectively buffer the cyclic expansion of the battery cells 60 and thus control the internal stress of the battery cores, thereby reducing the problem of short circuit or liquid leakage in the battery cells 60 caused by the extrusion of the battery cores, and reducing the risk of breaking through the explosion-proof valve caused by excessive internal pressure in the battery cells 60. Therefore, the safety performance of the battery assembly 10 can be further improved.

In addition, the heat insulation pad 70 reduces the cyclic expansion stress of the battery cells 60, and is also conducive to the sufficient infiltration of the electrolyte inside the cores, thereby maintaining a good ion transport interface in the cores and further facilitating the battery pack 10 having a higher cycle capacity retention.

In some embodiments, the thickness of the heat insulation pad 70 ranges from 1 mm to 10 mm, optionally from 1 mm to 8 mm, from 1.5 mm to 5 mm, from 2 mm to 6 mm, or from 2 mm to 4 mm, or the like. A heat insulation pad 70 having a thickness within the appropriate ranges can effectively block the heat and buffer the expansion stress, and meanwhile allows the battery assembly 10 to have a smaller volume or weight, thereby obtaining a battery having higher safety performance and higher volume energy density or gravimetric energy density.

In some embodiments, the aerogel 72 is spherical or quasi-spherical particle. Optionally, the aerogel has a sphericity of ≥ 0.8. Sphericity is the ratio of the average (including the largest diameter) of several (for example, 5) differently oriented diameters of a particle to the largest diameter of the particle. Diameter of a particle can be determined using methods known in the art, such as using vernier calipers. The closer the sphericity is to 1, the closer the particle morphology is to spherical shape. The aerogel 70 having a spherical or quasi-spherical morphology will have relatively uniform stress distribution when it is compressed (for example, the compression molding pressure in the preparation of the heat insulation pad 70, or the cyclic expansion force of the battery cells 60 in use) and can reduce the stress concentration phenomenon, thereby ensuring that the particles are not easily broken and the pore structure inside the particles is not easily damaged, so that the heat insulation pad 70 has a better long-term thermal insulation performance. In addition, the aerogel 72 particles with spherical or quasi-spherical morphology themselves have good fluidity, which is conducive to their uniform dispersion in the silicone rubber 71, and has a relatively large contact area with the silicone rubber 71 to avoid powder falling. As a result, the heat insulation pad 70 can have better overall mechanical properties consistency and higher thermal insulation performance.

In some embodiments, the particle size of the heat insulation pad 72 ranges from 0.1 mm to 5 mm, optionally from 0.2 mm to 4 mm, from 0.3 mm to 3 mm, or from 0.5 mm to 2 mm, or the like. Aerogel 72 having a particle size within the appropriate ranges can not only lead to better dispersion uniformity of particles in the aerogel 72, but also ensure that the heat insulation pad 70 has a high volume ratio of aerogel 72, thereby providing better thermal insulation performance of the heat insulation pad 70. In addition, the aerogel 72 having particle size within the appropriate ranges can facilitate the preparation and molding of the heat insulation pad 70 and ensure the cohesiveness of the heat insulation pad 70 with a relatively high volume ratio of the aerogel 72, so that the particles are not easy to fall off.

In some embodiments, the aerogel 72 includes an aerogel with a particle size that ranges from 1.8 mm to 2.2 mm, an aerogel with a particle size that ranges from 0.8 mm to 1.2 mm, and an aerogel with a particle size that ranges from 0.4 mm to 0.6 mm. Through reasonable particle size matching, the volume ratio of aerogel 72 in the heat insulation pad 70 can be further increased, and meanwhile the thermal bridge phenomenon that may be caused by the presence of more silicone rubber 71 in gaps between particles can be reduced, thereby further improving thermal insulation effect of the heat insulation pad 70.

In some embodiments, the aerogel includes an aerogel with a particle size from 1.8 mm to 2.2 mm, an aerogel with a particle size from 0.8 mm to 1.2 mm, and an aerogel with a particle size from 0.4 mm to 0.6 mm in a volume ratio of (25 to 40) : (5 to 10) : (1 to 3), optionally (28 to 37) : (6 to 10) : (1.5 to 3), or (30 to 35) : (7 to 9) : (1.5 to 2.5). For example, the volume ratio is 32:8:2. By further optimizing the particle size matching, the thermal insulation performance of the heat insulation pad 70 can be further improved.

In some embodiments, the aerogel 72 has a pore size that ranges from 1 nm to 500 nm, optionally from 10 nm to 100 nm, from 10 nm to 70 nm, from 15 nm to 50 nm or from 30 nm to 50 nm. The aerogel 72 having a nano-scale porous structure of appropriate size can achieve "locking" of air molecules to reduce thermal convection, thus further reduce the thermal conductivity coefficient of the heat insulation pad 70, thereby further improving the thermal insulation performance. In addition, the aerogel 72 having pore size within an appropriate range can structurally prevent liquid silicone rubber from infiltrating during the preparation process of the heat insulation pad 70 and prevent the pore structure of the particles from being damaged, thereby helping the heat insulation pad 70 to provide higher thermal insulation performance.

In some embodiments, the aerogel 72 is selected from one or more of inorganic oxide aerogels, carbon-based aerogels, and organic polymer aerogels. In some embodiments, the aerogel 72 is selected from inorganic oxide aerogels. For example, the inorganic oxide aerogel is selected from one or more of silicon oxide aerogel, aluminum oxide aerogel, zirconium oxide aerogel, and yttrium oxide aerogel. Optionally, aerogel 72 includes or is silicon oxide aerogel. Examples of carbon-based aerogels include one or more of graphene aerogels and carbon nanotube aerogels. Examples of organic polymer aerogels include phenolic resin aerogels. A suitable aerogel 72 has a low thermal conductivity coefficient, which enables the heat insulation pad 70 to have a relatively high thermal insulation performance.

In some embodiments, the aerogel 72 is surface-modified with a polymer. The modification here can be coating with the polymer on the surface of the aerogel 72 particles. The polymer may be selected from one or more of polyolefin acids, esters of polyolefin acids (polyolefin acid esters), polyethers, polyalcohols, polyolefins, their derivatives, and their copolymers. Optionally, the polymer is selected from one or more of polyolefin acids, esters of polyolefin acids. As particular examples, the polymer is selected from one or more of polyacrylic acid, polymethyl methacrylate, polyethyl methyl acrylate, polyethylene glycol, polyvinyl alcohol, polystyrene, polybutadiene, polypropylene, their derivatives, and their copolymers. In some embodiments, the polymer is selected from one or more of polyacrylic acid, polymethyl methacrylate, polyethyl methyl acrylate.

The surface modification of the aerogel 72 by the polymer can not only result in the aerogel 72 particles having higher strength so as not to be easily broken during the compression process, but also protect pore structure of the particles from being damaged during the compounding process of the aerogel 72 and the liquid silicone rubber, and meanwhile can enhance the adhesion of the aerogel 72 particles to the silicone rubber 71. Thus, by using polymer-modified aerogel 72, the heat insulation pad 70 can better take its thermal insulation effect.

In the present application, the choice of the silicone rubber 71 may be determined according to practical application requirements without significantly impairing the thermal insulation and buffering effects of the heat insulation pad 70. In some embodiments, the silicone rubber 71 may be condensation-type or addition-type silicone rubber. The condensation-type silicone rubber can be a one-component condensation-type silicone rubber or a two-component condensation-type silicone rubber. The addition-type silicone rubber can be a one-component addition-type silicone rubber or a two-component addition-type silicone rubber. In some embodiments, the silicone rubber 71 is two-component addition-type silicone rubber. Two-component silicone rubber has better controllability in the preparation process of the heat insulation pad 70 and facilitate operation. Two-component addition-type silicone rubber is not prone to shrinkage during the vulcanization process, and the resulting heat insulation pad 70 has relatively high structural strength.

In some embodiments, silicone rubber 71 may be one or more of silicone rubber, methyl vinyl silicone rubber, methyl phenyl vinyl silicone rubber, nitrile silicone rubber, and silicon nitrogen rubber. Optionally, silicon nitrogen rubber 71 is two-component addition-type silicone rubber. Silicone rubber has the advantages of low thermal conductivity, high strength, and good adhesion. Two-component addition-type silicone rubber also has the advantage of low shrinkage during vulcanization.

In some embodiments, the silicone rubber 71 includes foamed silicone rubber. For example, a foaming agent may be added in the above silicone rubber 71. By using foamed silicone rubber, closed pores can be formed in the silicone rubber 71 matrix of the heat insulation pad 70, thereby further reducing the thermal conductivity coefficient of the heat insulation pad 70 and thus further improving the thermal insulation performance. As an example, one of the components in two-component silicone rubber contains 1 to 8% by weight of a vulcanizing agent and more than 0 and less than or equal to 5% by weight of a foaming agent. The vulcanizing agent and the foaming agent may be those known in the art. By reasonably controlling the ratio of the vulcanizing agent and the foaming agent, the foaming speed and the vulcanization speed can be matched during the preparation of the heat insulation pad 70, and the resulting heat insulation pad 70 with relatively high structural strength can be formed while forming closed-cell pores with appropriate pore diameters.

In the present application, the compressive elastic modulus of the heat insulation pad has the meaning well-known in the art, and may be measured by instruments and methods known in the art. For example, an electronic universal testing machine (e.g. model CMT4204) may be used. The test can refer to GBAT7757-2009. An exemplary test method is as follows: a heat insulation pad sample of length * width = 80 mm * 80 mm is cut; CMT4204 electronic universal testing machine is used at 25 °C; the heat insulation pad is compressed along the thickness direction of the heat insulation pad at a compression rate of 2 mm/min until the strain is 50 % to obtain a stress-strain curve; the compressive elastic modulus of the heat insulation pad is calculated by dividing the stress in the linear range by the strain. In order to obtain more accurate test results, test results of multiple (for example, 10) samples can be taken to calculate the average value as compressive elastic modulus of the heat insulation pad.

In the present application, the compressive strength of the heat insulation pad has the meaning well-known in the art, and may be measured by instruments and methods known in the art. For example, an electronic universal testing machine (e.g. model CMT4204) may be used. The test can refer to GBAT7757-2009. As an example, the heat insulation pad can be compressed with reference to the compressive elastic modulus test method to obtain the maximum compressive stress at which the heat insulation pad ruptures or yields, that is, the compressive strength of the heat insulation pad.

In the present application, the thermal conductivity coefficient of the heat insulation pad has the meaning well-known in the art, and may be measured by instruments and methods known in the art. For example, a dual-plate thermal conductivity tester (e.g., model WNK-200D) may be used. The test can refer to GB/T10294-2008. An exemplary test method is as follows: a heat insulation pad sample with a diameter of 100 mm is cut; WNK-200D double-plate thermal conductivity tester is used to test the thermal conductivity coefficient of the heat insulation pad at a test temperature of 100°C.

In the present application, the thickness of the heat insulation pad has the meaning well-known in the art, and may be measured by instruments and methods known in the art. For example, thickness gauge may be used.

In the present application, the particle size of the aerogel has the meaning well-known in the art, and may be measured by instruments and methods known in the art. An exemplary test method is as follows: a screen is used for sieving particles, and then particle size is determined by using a vernier caliper. In order to obtain more accurate test results, test results of multiple (for example, 20) particles can be taken to calculate the average value as particle size of the aerogel. The particle size of the aerogel in the heat insulation pad can be tested by taking SEM pictures with a scanning electron microscope. The test can refer to JY/T010-1996. An exemplary test method is as follows: SEM images of test samples are taken by using a scanning electron microscope. The particle size of the aerogel is calculated from the SEM images.

In the present application, the pore size of the aerogel has the meaning well-known in the art, and may be measured by instruments and methods known in the art. For example, a porosity analyzer (e.g., ASAP 2020) is used.

The present application also provides a method for preparing a heat insulation pad, the method comprising the following steps: dispersing an aerogel in a liquid silicone rubber to form a film body; and molding the film body by vulcanization, to obtain the heat insulation pad.

The aerogel can be dispersed in the liquid silicone rubber by physical mixing method, so that the aerogel and the liquid silicone rubber are fully adhered, and a film body is formed. As an example, the aerogel can be mixed with liquid silicone rubber by mechanical mixing. The way of mechanical mixing can be stirring mixing. Then the mixture is added into a mold, and compression-molded.

As another example, the aerogel can be spread in a single layer or multiple layers in a mold, and then liquid silicone rubber can be injected into gaps between the aerogel particles. Multi-site injection may be used in the injection process. In this way, the liquid silicone rubber can be uniformly injected into the gaps between the aerogel particles, and thus can effectively bond the particles, thereby significantly improving the overall structural strength and meanwhile resulting in the heat insulation pad having a good compressive elastic modulus. After injecting silicone rubber, compression molding is carried out. Die-casting molding process can be used for compression molding. Pressing, especially hot pressing, can lead to a flatter overall structure, and facilitate further penetration of the silicone rubber into the gaps between the particles, to achieve adhesion and strength support effects. As an example, liquid silicone rubber may be injected by injection.

In some embodiments, a mass ratio of the liquid silicone rubber to the aerogel is 1 : (0.2 to 2), optionally 1 : (1 to 2), or 1 : (1.5 to 2).

In some embodiments, a volume ratio of the liquid silicone rubber to the aerogel ranges from 50:50 to 8:92, optionally from 30:70 to 10:90, from 40:60 to 10:90, from 40:60 to 20:80, or from 30:70 to 20:80.

The ratio of the liquid silicone rubber to the aerogel within the appropriate ranges can lead to the resulting heat insulation pad having relatively high thermal insulation performance and meanwhile good compressive elastic modulus and compressive strength.

In some embodiments, the liquid silicone rubber has a viscosity that ranges from 0.1 Pa s to 50 Pa s, optionally from 0.3 Pa s to 25 Pa s, from 0.5 Pa s to 15 Pa s, from 0.5 Pa s to 10 Pa s, from 1 Pa s to 20 Pa s, or from 1 Pa·s to 10 Pa s, and the like. Liquid silicone rubber having the viscosity within the appropriate ranges can facilitate uniformly mixing of the aerogel and the liquid silicone rubber and improve the adhesion of the aerogel, and meanwhile resulting in the heat insulation pad having better compressive strength and compressive elastic modulus.

In any embodiment, the temperature for compression molding may range from 0°C to 150°C, from 20°C to 100°C, from 50°C to 100°C, from 60°C to 80°C, or from 70°C to 75°C. The pressure for compression molding may range from 0.05 MPa to 2 MPa, from 0.08 MPa to 1 MPa, from 0.1 MPa to 0.5 MPa, or from 0.1 MPa to 0.3 MPa.

The temperature and time for molding the film body by vulcanization can be determined according to the type of liquid silicone rubber and its vulcanization mechanism. In some embodiments, the temperature for vulcanization of the film body may range from 20°C to 150°C, from 100°C to 150°C, from 25°C to 120°C, from 50°C to 100°C, or from 80°C to 100°C, and the like. The time for vulcanization can range from 20 min to 300 min, from 30 min to 200 min, from 50 min to 150 min, from 80 min to 240 min, from 80 min to 150 min, from 80 min to 120 min, or from 100 min to 200 min, and the like.

In the preparation method, the aerogels and the silicone rubbers can be those described above, which will not be repeated here. Also, both the aerogels and the liquid silicone rubber are commercially available.

In some embodiments, aerogels may be prepared as follows.

Silicon source, water, alcohol and acid are mixed to obtain a mixed solution. In some embodiments, mass ratio of the silicon source, water, alcohol and acid in the mixed solution may be 1 : (3 to 5) : (4 to 7) : (1.5×10⁻³ to 2×10⁻³); for example 1 : 4 : 6 : 2×10⁻³. As an example, the silicon source may be selected from methyl orthosilicate, ethyl orthosilicate, butyl orthosilicate. The alcohol may be selected from ethanol, propanol, butanol. The acid may be selected from acetic acid, hydrochloric acid or sulfuric acid.

The mixed solution is subjected to a hydrolysis reaction to form a silica sol. In some embodiments, the temperature for hydrolysis reaction may range from 20°C to 30°C, preferably from 25°C to 30°C. The time for hydrolysis reaction may range from 5 h to 15 h, or from 8 h to 12 h.

The silica sol is mixed with ammonia water so that the mixed system has a pH value that ranges from 7 to 8.5, or from 7.5 to 8. In some embodiments, the volume of ammonia water may be 2 to 3 times, such as 2.5 times, the volume of the silica sol. The concentration of ammonia water can range from 0.3 mol/L to 0.5 mol/L.

The mixed system is injected into oil phase, and the sol gels rapidly in the oil phase to form spherical or quasi-spherical silica gel suspended on the surface of the oil phase. In some embodiments, the oil phase may be selected from one or more of vegetable oils, mineral oils, and synthetic oils. As an example, the oil phase may be selected from one or more of soybean oil, peanut oil, paraffin oil, and glycerin. In the aerogel prepared by this method, most of the hydrophilic functional groups extend inward, which reduces the possibility of the silicone rubber components infiltrating and destroying the pores of the aerogel, thereby protecting the integrity of the pore structure and resulting in the aerogel having low thermal conductivity. At the same time, the obtained aerogel can maintain its own shape, thus reduce the stress concentration caused by structural rupture and ensure the overall structural strength of the heat insulation pad.

The gel is then aged with ethanol. In some embodiments, the aging time may be 2 to 4 days, such as 3 days.

The aged gel is supercritically dried to obtain silica aerogel. The use of supercritical drying can reduce the damage to pores by liquid evaporation, protect the integrity of pore structure of aerogel, and reduce thermal conductivity. In some embodiments, carbon dioxide supercritical drying may be used for supercritical drying process. The pressure for supercritical drying may range from 10 MPa to 20 MPa, or from 12 MPa to 16 MPa. The temperature for supercritical drying may range from 50°C to 80°C, or from 60°C to 70°C. The time for supercritical drying may range from 100 min to 500 min, from 150 min to 600 min, or from 300 min to 500 min. Appropriate conditions for supercritical drying can further protect the integrity of pore structure of the aerogel.

In the embodiments of preparation example of aerogel, a better pore structure of hydrogel can be obtained by adjusting the concentration and ratio of reactants, hydrolysis reaction temperature, hydrolysis reaction time, aging time, supercritical drying time, and the like. For example, the pore size of aerogels ranges from 10 nm to 100 nm, especially from 15 nm to 50 nm, and even from 30 nm to 50 nm.

In some embodiments, the step of polymer-modifying the aerogel is optionally further included. As an example, the aerogel is mixed with the silane coupling agent solution; monomer(s) of a polymer is/are added to the mixed system; and the polymerization of the monomer(s) is initiated in the presence of an initiator; after filtration, washing and drying, the polymer is obtained for aerogel that is coated on its surface by the polymer.

In the mixing step of the aerogel and the silane coupling agent solution, the silane coupling agent solution may be a mixed solution of silane coupling agent, water and alcohol. The silane coupling agent can be selected from methacryloyloxypropyltrimethoxysilane (MPS), 3 -(methacryloyloxy)propyltrimethoxysilane (KH-570). The alcohol may be selected from ethanol, propanol, butanol. The mass ratio of silane coupling agent, water and alcohol in the silane coupling agent solution is 1 : (3 to 5) : (7 to 9), for example, 1 : 4 : 8. The ratio of the aerogel to the silane coupling agent solution ranges from 10 g/L to 40 g/L.

The aerogel and the silane coupling agent solution may be mixed by stirring, such as mechanical stirring, magnetic stirring, ultrasonic stirring, and the like. The time for stirring may range from 10 h to 24 h.

The monomer(s) of the polymer is/are added to the mixed system, and the amount of the monomer(s) added may range from 1 to 5 times, or from 3 to 4.5 times the mass of the aerogel.

The monomer(s) undergo(es) a polymerization reaction, wherein the type of the initiator is not particularly limited and can be a conventional choice in the field. The polymerization conditions and the amount of initiator used are not particularly limited, and can be selected according to the specific types of monomer(s) and initiator. According to a specific embodiment, the monomer is methyl methacrylate MMA, the initiator is potassium persulfate KPS, and relative to 100 parts by weight of the monomer, the amount of the initiator may be 0.1 to 0.5 parts by weight. The polymerization may be carried out under a protective atmosphere. The protective atmosphere can be a nitrogen atmosphere or an inert gas atmosphere. The temperature for sintering is, for example, from 60°C to 80°C. The polymerization is carried out under normal pressure (atmospheric pressure). The polymerization time ranges from 4 h to 8 h.

The washing can be performed using methods known in the art. For example, deionized water may be used for washing. The temperature for supercritical drying may range from 60°C to 100°C, or from 70°C to 80°C.

In the present application, when the aerogels with different particle size ranges are combined, an exemplary test method for the proportions of aerogels with different particle size ranges is as follows: an electronic scale is used to measure the weight of the aerogels with each particle size rangem₁, m₂, ... mₙ, wherein n is an integer greater than or equal to 3; the proportions of aerogels in different particle size ranges are calculated according to (m₁/ρ₁): (m₂/ρ₂):......:(mₙ/ρₙ). ρ₁, ρ₂, ......, ρₙ represents the density of aerogels with each particle size range and can be calculated from the weight/volume of aerogel particles. The volume of the aerogel particles can be calculated according to the formula for calculating the volume of a sphere. In order to obtain more accurate test results, test results of multiple (for example, 32) particles can be taken for each particle size range to calculate the density respectively, and the average value can be taken as the density of the aerogel with this particle size range.

In the present application, mass ratio of the liquid silicone rubber to the aerogel has the meaning well-known in the art, and may be measured by instruments and methods known in the art. For example, an electronic scale may be used to measure the mass of silicone rubber and the mass of aerogel, respectively, and then the mass ratio is calculated.

In the present application, the volume ratio of the liquid silicone rubber to the aerogel has the meaning well-known in the art, and may be measured by instruments and methods known in the art. For example, a measuring cup may be used to test the volume of liquid silicone rubber; the volume of aerogel may be tested as described above; then the volume ratio can be calculated.

In the present application, the viscosity of the liquid silicone rubber has the meaning well-known in the art, and may be measured by instruments and methods known in the art. For example, a viscometer may be used. Another example is the JJAVD viscosity average molecular weight tester.

### Examples

The following examples are intended to describe the present application more specifically, merely for the purpose of illustration. Various modifications and variations within the scope of the present application are apparent to those skilled in the related art. Unless otherwise stated, all parts, percentages, and ratios described in the following embodiments are based on weight, and all reagents used in the embodiments are commercially available or synthesized according to conventional methods and can be directly used without further treatment, and all instruments used in the embodiments are commercially available.

### I. Preparation of battery assembly

### 1.1. Preparation of aerogels

(1) A mixed solution was obtained at the mass ratio of ethyl silicate : water : ethanol: HCl = 1 : 4 : 6 : 2×10⁻³ and was subjected to a hydrolysis reaction at 25°C for 12 h to form a silica sol.
(2) Ammonia water in an amount equivalent to 2.5 times the volume of the silica sol was added to the silica sol, so that the pH of the mixed system ranges from 7.5 to 8.
(3) The mixed system was rapidly injected into oil phase (soybean oil), and the sol gelled rapidly in the oil phase to form spherical or quasi-spherical silica gel suspended on the surface of the oil phase.
(4) The silica gel was immersed in ethanol and aged for 3 days.
(5) Under the conditions of a pressure of 14 MPa and a temperature of 60 °C, the aged silica gel was subjected to carbon dioxide supercritical drying for 500 min to obtain silica aerogel spheres. The aerogels had a pore size ranging from 15 nm to 50 nm.

### 1.2. Modification of aerogels

(1) 10 g of silica aerogel was added to 400 mL of silane coupling agent MPS solution (in a mass ratio of MPS : water : ethanol = 1 : 4 : 8), and stirred for 24 h.
(2) 43 g methyl methacrylate (MMA) was added to the mixed system obtained in step (1); nitrogen was introduced; and 0.2 g potassium persulfate KPS was added as an initiator; and a polymerization reaction was carried out under stirring at 75°C for 6 h.
(3) After the reaction was terminated, the mixture was filtered, washed with deionized water, and then dried at 80°C to obtain polymethyl methacrylate (PMMA)-coated aerogels.

### 2. Preparation of heat insulation pad

(1) PMMA-coating modified silica aerogel with a particle size of 2±0.2 mm, and PMMA-coating modified silica aerogel with a particle size of 1±0.2 mm, PMMA-coating modified silica aerogel with a particle size of 0.5±0.1 mm were mixed in a volume ratio of 32 : 8 : 2; the mixed aerogel was then uniformly mixed with silicone rubber (Pt-catalyzed two-component addition-type) with a viscosity of 1 Pa•s by means of physical stirring and direct mixing.
(2) The mixture obtained in step (1) was uniformly spread in a mold, and compression molded into a plate with a uniform thickness at 75°C and 0.1 MPa by means of die-casting molding.
(3) The formed plate was cured at 80°C for 150 min to obtain a heat insulation pad. The thickness of the insulation pad was 4 mm.

### 3. Preparation of battery cell

### Preparation of positive electrode plate

A positive electrode active material LiNi_{0.5}Co_{0.2}Mn_{0.3}O₂, a conductive agent Super-P, and a binder polyvinylidene fluoride PVDF at a weight ratio of 95:2:3 were dispersed in a solvent NMP, stirred and mixed well to obtain a positive electrode slurry. The positive electrode slurry was applied on two opposite surfaces of a positive electrode current collector aluminum foil; after drying and cold pressing, a positive electrode plate was obtained. The positive electrode film layer had a single-sided coating density of 18.83 mg/cm² (without solvent), and a compacted density of 3.25 g/cm³.

### Preparation of negative electrode plate

A negative active material natural graphite, a conductive agent Super-P, a binder styrene butadiene rubber SBR and a thickener sodium carboxymethyl cellulose CMC-Na at a weight ratio of 93:3:2:2 were dispersed in a solvent deionized water, and then a negative electrode slurry was obtained after stirring and mixing uniformly. Then, the negative electrode slurry was coated on two opposite surfaces of a negative electrode current collector copper foil; after drying and cold pressing, a negative electrode plate was obtained. The negative electrode film layer had a single-sided coating density of 11.62 mg/cm² (without solvent), and a compacted density of 1.45 g/cm³.

### Preparation of electrolyte

Ethylene carbonate (EC), propylene carbonate (PC) and dimethyl carbonate (DMC) were mixed homogeneously at a weight ratio of 1:1:1, thereby obtain an organic solvent; then a lithium salt LiPF₆ was dissolved in the above organic solvent with mixing uniformly to obtain an electrolyte in which the concentration of LiPF₆ was 1 mol/L.

### Preparation of battery cell

The positive electrode plate, a porous separator, and the negative electrode plate were wound to obtain an electrode assembly; the electrode assembly was placed in an outer package in which the electrolyte was injected and then the outer package was packaged to obtain a battery cell.

### 4. Preparation of battery assembly

A plurality of battery cells were arranged side by side in a row, and two adjacent battery cells faced each other on their large surfaces. In addition, a heat insulation pad was disposed between every two adjacent battery cells. The heat insulation pad was in surface-to-surface contact with the adjacent battery cells. A battery assembly was obtained by fixing the battery cells using a fixing assembly that had end plates located at both ends of the battery assembly.

Examples 1 to 7 and Comparative Example 1: The battery assemblies were prepared according to the above preparation method, except that the ratios of aerogel and silicone rubber in the heat insulation pad were adjusted in examples. See Table 1 for details.

Examples 8 to 13: Similar to Examples 1 to 6, the difference is that aerogels without polymer modification were used.

### II. Test Section

### 1. Tests on heat insulation pad

(1) Test on the parameters of the heat insulation pad using the methods above.
(2) Test on compressive stress retention

Test on compressive retention was a non-standard test with reference to GB/T1685-2008. A sample of heat insulation pad with length * width = 80 mm * 80 mm was cut, and put into a clamp; the pressure of clamp was adjusted to keep the compression of the sample at 20% compression amount, then the pressure value was recorded. This compression amount was kept at room temperature for 30 days; the pressure value at the same compression amount after 30 days was recorded; finally, the experimental result of the compressive stress retention after 30 days was obtained.

### 2. Performance test of battery assembly

### (1) Temperature difference test

A heat insulation pad sample with length * width = 140 mm * 70 mm was cut and clamped between two alloy steel plates with length * width * thickness = 140 mm * 70 mm * 26mm to form a sandwich structure stack, in which the heat insulation pad sample was in surface-to-surface contact with the alloy steel plates with the edges aligned; a pressure of 0.9 MPa was applied to the stack, and the alloy steel plate on one side of the heat insulation pad was heated to 600°C and kept for 5 minutes followed by pressure relief; and the sample was continued to contact the alloy steel plate at 600°C for another 20 minutes; the temperature of the hot surface T1 and the temperature of the cold surface T2 of the heat insulation pad were measured, and the temperature difference T1-T2 was calculated. A pressure sensor was used to monitor pressure and a temperature sensor was used to monitor temperature.

### (2) Safety performance test of thermal runaway of battery assembly

The battery assembly was charged to 100% SOC (State of charge). Thermal runaway occurred in one of the battery cells in the battery assembly (for example, by punctuation or heating of the battery cell. If the temperature of a battery cell exceeded 60°C and increased sharply, it was determined that thermal runaway occurred), and the time t (min) for the thermal runaway of a battery cell adjacent to the thermal runaway battery cell was recorded. That is, without cooperating with other cooling procedures, the time t when thermal runaway occurred in the second battery cell was calculated from the time when thermal runaway occurred in the first battery cell. The longer the time t was, the better the thermal runaway safety performance of the battery assembly was.

### (3) Cycle performance test of battery assembly

Battery assembly stress simulation software Abaqus was used to simulate the maximum stress F at the end of the battery assembly after cyclic expansion (the maximum stress F was obtained by dividing the maximum force at the end of the battery assembly by the area of the end plate). In order to maintain a good cycle life of the battery assembly, the maximum stress F at the end of the battery assembly after cyclic expansion was required to be < 215 MPa. The simulation parameter was as follows: a preload of 5000 N applied to the battery assembly. At 25°C, the battery assembly began with 5% SOC, was charged to 50% SOC at a constant current of 3C, then charged to 70% SOC at a constant current of 2C, and then charged to 80% SOC at a constant current of 1C, and then discharged to 5% SOC at constant current of 1C. This was a charge-discharge cycle. The battery assembly was subjected to 2500 charge-discharge cycles.

**Table 1: related parameters of heat insulation pad**

| No. | Preparation parameters | | heat insulation pad | | | | |
|---|---|---|---|---|---|---|---|
| | volume ratio of silicone rubber | volume ratio of aerogel | thermal conductivity coefficient [W/(m·K)] | compressive strength [MPa] | compressive elastic modulus [MPa] | compressive stress retention [%] | temperature difference [°C] |
| Example 1 | 60% | 40% | 0.13 | 45 | 2 | 41.8 | 176 |
| Example 2 | 50% | 50% | 0.085 | 25 | 3.8 | 55.6 | 220 |
| Example 3 | 40% | 60% | 0.065 | 15.8 | 6.6 | 67.1 | 318 |
| Example 4 | 30% | 70% | 0.062 | 10.9 | 12.3 | 73.3 | 326 |
| Example 5 | 20% | 80% | 0.038 | 7.3 | 16.8 | 80.2 | 382 |
| Example 6 | 10% | 90% | 0.025 | 5.2 | 24.5 | 82.3 | 453 |
| Example 7 | 8% | 92% | 0.022 | 4.9 | 25.8 | 83.0 | 465 |
| Example 8 | 60% | 40% | 0.12 | 28.1 | 1.8 | 40.2 | 194 |
| Example 9 | 50% | 50% | 0.082 | 16.3 | 2.6 | 54.2 | 233 |
| Example 10 | 40% | 60% | 0.058 | 10.7 | 5.4 | 66.8 | 362 |
| Example 11 | 30% | 70% | 0.037 | 7.7 | 12.8 | 73.5 | 385 |
| Example 12 | 20% | 80% | 0.03 | 3.4 | 14.4 | 81.3 | 432 |
| Example 13 | 10% | 90% | 0.024 | 3 | 15.1 | 81.5 | 460 |
| Comparative Example 1 | 100% | 0% | 0.18 | No compressive strength | 1.2 | 28.5 | 144 |

The temperature difference represents a comprehensive reflection of the thermal conductivity, thickness, and compressive mechanical properties of the heat insulation pad. It can be seen from the data in Table 1 that when the temperature difference was within the appropriate range, the heat insulation pad not only had a low thermal conductivity, but also had an appropriate compressive strength, compressive elastic modulus and compressive stress retention. Using the heat insulation pad in a battery assembly can effectively block the heat conduction from a battery cell in thermal runaway to an adjacent battery cell, thereby improving the safety performance of the battery assembly.

Further, the surface modification of aerogel by polymer can further improve the compressive strength, compressive elastic modulus and compressive stress retention rate of the heat insulation pad. The heat insulation pad is not prone to rupture or yield under the action of cyclic expansion force of battery cells, thus it can effectively provide heat insulation for a long time. At the same time, the heat insulation pad can also buffer the cyclic expansion stress of the battery in a long time scale, thereby further improving the safety performance of the battery assembly, and also facilitating a longer cycle life of battery assembly.

**Table 2: Performance test**

| No. | Battery assembly | |
|---|---|---|
| | Time t when the thermal runaway occurs in a battery cell adjacent to a battery cell in thermal runaway [min] | Maximum stress F at the end of battery assembly after cyclic expansion [MPa] |
| Example 1 | 3 | 152 |
| Example 2 | 5 | 153 |
| Example 3 | 6 | 155 |
| Example 4 | 8 | 161 |
| Example 5 | 12 | 178 |
| Example 6 | 16 | 200 |
| Example 7 | 20 | 208 |
| Example 8 | 4 | 146 |
| Example 9 | 6 | 152 |
| Example 10 | 9 | 154 |
| Example 11 | 13 | 158 |
| Example 12 | 15 | 165 |
| Example 13 | 16 | 201 |
| Comparative Example 1 | 0.75 | 120 |

It can be seen from the results in Table 2 that the use of the heat insulation pad of the present application can greatly delay the thermal diffusion of the thermally runaway battery cells in battery assembly to the adjacent battery cells, thereby effectively improving the safety performance of the battery. Meanwhile, the heat insulation pad of the present application can also buffer the cyclic expansion of the battery assembly, which is beneficial to maintaining a good cycle life of the battery assembly.

It will be apparent to those skilled in the art that the present application may be modified and varied in accordance with the above teachings. Accordingly, the present application is not limited to the specific embodiments disclosed and described above, and modifications and variations of the present application are intended to be included within the scope of the claims of the present application. Therefore, the protection scope of the present application shall be determined by the protection scope of the claims.

## Claims

1. A heat insulation pad for use in a battery assembly, wherein the heat insulation pad comprises a silicone rubber and an aerogel dispersed in the silicone rubber,
wherein the heat insulation pad satisfies that: a temperature difference between a surface on one side of the heat insulation pad and a surface on the other side opposite to the one side is ≥ 150°C, when the surface on one side of the heat insulation pad contacts a hot surface having a temperature of 600°C for 5 minutes under a pressure of 0.9 MPa followed by pressure relief and then contacts a hot surface having a temperature of 600°C for another 20 minutes.

2. The heat insulation pad according to claim 1, wherein the temperature difference ranges from 200°C to 465°C.

3. The heat insulation pad according to claim 1 or 2, wherein the heat insulation pad has a thermal conductivity coefficient at 100°C that ranges from 0.022 W/(m K) to 0.09 W/(m K).

4. The heat insulation pad according to any one of claims 1 to 3, wherein the heat insulation pad has a compressive strength that ranges from 1 MPa to 30 MPa.

5. The heat insulation pad according to any one of claims 1 to 4, wherein the heat insulation pad has a compressive elastic modulus that ranges from MPa to 40 MPa.

6. The heat insulation pad according to any one of claims 1 to 5, wherein the aerogel comprises an aerogel with a particle size that ranges from 1.8 mm to 2.2 mm, an aerogel with a particle size that ranges from 0.8 mm to 1.2 mm, and an aerogel with a particle size that ranges from 0.4 mm to 0.6 mm;
a volume ratio of the aerogel with a particle size from 1.8 mm to 2.2 mm, the aerogel with a particle size from 0.8 mm to 1.2 mm, and the aerogel with a particle size from 0.4 mm to 0.6 mm is (25 to 40) : (5 to 10) : (1 to 3).

7. The heat insulation pad according to any one of claims 1 to 6, wherein the aerogel is selected from one or more of inorganic oxide aerogels, carbon-based aerogels, and organic polymer aerogels; optionally, the inorganic oxide aerogel is selected from one or more of silicon oxide aerogel, aluminum oxide aerogel, zirconium oxide aerogel, and yttrium oxide aerogel.

8. The heat insulation pad according to any one of claims 1 to 7, wherein the aerogel is surface-modified with a polymer; optionally, the polymer is selected from one or more of polyolefin acids, esters of polyolefin acids, polyethers, polyalcohols, polyolefins, their derivatives, and their copolymers.

9. The heat insulation pad according to any one of claims 1 to 8, wherein the silicone rubber is condensation-type or addition-type silicone rubber.

10. The heat insulation pad according to claim 9, wherein the silicone rubber is two-component addition-type silicone rubber; optionally, the silicone rubber comprises one or more of silicone rubber, methyl vinyl silicone rubber, methyl phenyl vinyl silicone rubber, nitrile silicone rubber, and silicon nitrogen rubber.

11. The heat insulation pad according to claim 9, wherein the silicone rubber comprises foamed silicone rubber.

12. A battery assembly, comprising a plurality of battery cells arranged in an array, wherein the heat insulation pad according to any one of claims 1 to 11 is disposed between at least two adjacent battery cells.

13. An electrical device, comprising the battery assembly according to claim 12.

14. A method for preparing a heat insulation pad, comprising the following steps:
dispersing an aerogel in a liquid silicone rubber to form a film body; and
molding the film body by vulcanization to obtain a heat insulation pad;
wherein the heat insulation pad satisfies that: a temperature difference between a surface on one side of the heat insulation pad and a surface on the other side opposite to the one side is ≥ 150°C, when the surface on one side of the heat insulation pad contacts a hot surface having a temperature of 600°C for 5 minutes under a pressure of 0.9 MPa followed by pressure relief and then contacts a hot surface having a temperature of 600°C for another 20 minutes.
